# EUROPÄISCHE PATENTANMELDUNG

(11) **EP 1 276 198 A2**
(43) Veröffentlichungstag der Anmeldung: **15.01.2003**
(21) Anmeldenummer: 02450113.2
(22) Anmeldetag: 06.05.2002
(51) Int. Cl.: H02G 3/32, H02G 3/04

(54) **Kabelanlage**

(30) Priorität: 13.07.2001 AT 10952001
(71) Anmelder: Fleck Elektroinstallationen Ges. m. b. H., 1100 Wien (AT)
(72) Erfinder: Koca, Dieter, 3434 Wilfersdorf (AT); Fleck, Wilhelm, 5700 Zell am See (AT)
(74) Vertreter: Matschnig, Franz, Dipl.-Ing.

(57) **Zusammenfassung**

Die Erfindung betrifft eine Kabelanlage bestehend aus zumindest einem Kabel (100), welches von einer Kabeltragekonstruktion gehalten ist, wobei die Kabeltragekonstruktion besteht aus:
- zumindest einer aus Kunststoff gebildeten Kabeltasse (4, 5), in welcher das zumindest eine Kabel verlegt ist;
- Halteelementen (6, 7; 40 - 43; 70; 80), welche zur Halterung der Kabeltasse (4, 5) dienen, wobei die Halteelemente (6, 7; 60) je an einer Halteschiene (2, 3) mittels zumindest eines Befestigungssatzes (40'- 43'; 64, 65, 65'; 90, 91, 92) befestigbar sind.

Erfindungsgemäß weist die Halteschiene (60, 70) zumindest eine Rastvorrichtung (77; 87, 87') aufweist, mittels welcher der Befestigungssatz (40' - 43'; 64, 65, 65'; 90, 91, 92) des Halteelementes (6, 7; 40 - 43; 70; 80) zusammenwirkt. Der Befestigungssatz (40' - 43'; 64, 65, 65'; 90, 91, 92) ist aus einem hitzebeständigen Material gebildet, das und zumindest eine Kabel (100, 200) einen Aufbau aufweist, bei dem die leitenden Teile (201) und/oder Adern (102) von zumindest einem Mantel (106; 203, 208, 211) umgeben sind, welcher bei entsprechender Hitzeeinwirkung ein Aschgerüst bildet und/oder die leitenden Teile (201) und/oder Adern (102) von einem anorganischen, brandbeständigen Material (104, 105; 204, 206) vollständig ummantelt sind.

## Beschreibung

Die Erfindung betrifft eine Kabelanlage bestehend aus zumindest einem Kabel, welches von einer Kabeltragekonstruktion gehalten ist, wobei die Kabeltragekonstruktion besteht aus:
- zumindest einer aus Kunststoff gebildeten Kabeltasse, in welcher das zumindest eine Kabel verlegt ist;
- Halteelementen, welche zur Halterung der Kabeltasse dienen, wobei die Halteelemente je an einer Halteschiene mittels zumindest eines Befestigungssatzes befestigbar sind.

Bei der Errichtung von Kabelanlagen insbesondere in Tunnels sind besonders hohe Sicherheitsanforderungen an diese Anlagen im Falle eine Brandes zu richten. Einerseits muss versucht werden, die Brandgefahr an sich möglichst gering bzw. im Falle eines Brandes das Ausmaß des Brandes und Zerstörungen durch den Brand möglichst gering zu halten, andererseits muss aber auch noch ein Funktionserhalt der Kabelanlage im Falle eines Brandes für eine bestimmte Mindestdauer gegeben sein, damit etwa ein Zug und die darin befindlichen Personen in der Brandzone noch angesprochen, gesteuert und aus der Gefahrenzone bewegt werden können.

Üblicherweise besteht eine Kabelanlage aus einem oder mehreren Kabeln, beispielsweise Energiekabeln, Signal- und Steuerkabeln, Lichtwellenleiterkabeln, etc., die entlang einer Tunnelwand oder freihängend im lichten Raum entlang des Tunnels geführt sind. Dazu sind diese in sogenannten Kabeltassen verlegt, die von Halteelementen, beispielsweise Auslegern, gehalten sind.

Üblicherweise werdend dabei Kabeltassen aus Kunststoff verwendet, da metallische Tassen nachteilige elektrische Eigenschaften aufweisen. Beispielsweise kommt es durch unmittelbar benachbarte, unter Hochspannung stehende Stromschienen leicht zu Stromrückführungen über die zwischen den Auslegern befindlichen Metalltassen, sodass dort unter Umständen gefährliche Spannungen auftreten können. Dadurch ist in nachteiliger Weise eine aufwändige Erdung der Metalltassen notwendig.

Einzelne Bestandteile solcher Kabelanlagen, beispielsweise die Kabel selbst, müssen genormte Brandprüfungen, beispielsweise EN 50265 (*Allgemeine Prüfverfahren für das Verhalten von Kabeln und isolierten Leitungen im Brandfall - Prüfung der vertikalen Flammenausbreitung an einer Ader oder einem Kabel*), EN 50266 (*Allgemeine Prüfverfahren für das Verhalten von Kabeln und isolierten Leitungen im Brandfall - Prüfung der senkrechten Flammenausbreitung von senkrecht* *angeordneten Bündeln von Kabeln und isolierten Leitungen*), IEC 60331-xx (*Tests for electric cables under fire conditions - Circuit integrity*), NBN C 30-004 (*Feuerbeständigkeit von elektrischen Kabeln und Leitungen - Klassifikation und Prüfmethoden*) erfüllen, so dass selbst im Brandfall und unter hoher Temperaturentwicklung die Kabel für eine bestimmte Zeitspanne noch ihre Aufgabe erfüllen.

Von wesentlich größerer Bedeutung ist allerdings nicht der Funktionserhalt einzelner Bestandteile der Kabelanlage, sondern der integrierte Funktionserhalt der gesamten Kabelanlage. In Folge der Hitzeentwicklung kommt es beispielsweise oftmals zu einem Lösen der Halteelemente für die Kabeltassen von den Halteschienen, was ein Abrutschen der Tassen bzw. ein zu Bodenfallen mit sich bringt. Dadurch kommt es bei den in der Regel in einem oberen Deckenbereich aufgehängten Kabeln zu einem starken Durchhängen, wodurch die Kabel mechanisch stark belastet werden. In Folge dieser mechanischen Belastung ergeben sich oft Risse, Knicke oder gar ein Abbrechen der ohnehin durch die Hitze schon belasteten Kabel, sodass es zu einer Zerstörung des Kabels kommt, obwohl dieses für sich alleine genommen der Hitze Stand gehalten hätte.

Es ist daher eine Aufgabe der Erfindung, eine Kabelanlage mit Kunststofftassen zu schaffen, bei welcher der integrierte Funktionserhalt der Anlage im Brandfalle für eine bestimmte Mindestdauer gegeben ist.

Insbesondere ist es eine Aufgabe der Erfindung, eine Kabelanlage zu schaffen, die einen integrierten Funktionserhalt bei einer Brandprüfung nach DIN 4102 Teil 12 erfüllt.

Diese Aufgaben werden mit einer eingangs erwähnten Kabelanlage dadurch gelöst, dass erfindungsgemäß
a) die Halteschiene zumindest eine Rastvorrichtung aufweist, mittels welcher der Befestigungssatz des Halteelementes zusammenwirkt,
b) der Befestigungssatz aus einem hitzbeständigen Material gebildet ist, und
c) das zumindest eine Kabel einen Aufbau aufweist, bei dem die leitenden Teile und/oder Adern von zumindest einem Mantel umgeben sind, welcher bei entsprechender Hitzeeinwirkung ein Aschgerüst bildet und/oder die leitenden Teile und/oder Adern von einem anorganischen, brandbeständigen Material vollständig ummantelt sind.

Durch die obige erfindungsgemäße Merkmalskombination wird erreicht, dass nicht nur der Funktionserhalt der einzelnen Bestandteile der Kabelanlage, sondern auch der integrierte Funktionserhalt der gesamten Kabelanlage im Brandfall gewährleistet ist. Durch das Merkmal c) ist dabei insbesondere gewährleistet, dass im Brandfall die einzelnen Kabel ihre Funktion für einen gewissen Zeitraum aufrecht erhalten können, während durch die Merkmale der Punkte a) und b) sicher gestellt ist, dass im Brandfalle auch die Befestigung der Kabel Stand hält und die Kabel nicht durch mechanische Kräfte etwa bei einem Herunterfallen in Folge Zerstörung der Befestigungsmittel in ihrer Funktion beeinträchtigt werden.

Anzumerken ist an dieser Stelle, dass unter dem Begriff "Mantel" bzw. "Ummantelung" nicht nur Mäntel in dem üblicherweise im Zusammenhang mit Kabeln zu verstehenden Sinne gemeint sind, sondern dass beispielsweise auch Isolierungen, etc. unter diesem Begriff zu verstehen sind.

Besonders hitzebeständig ist der Befestigungssatz, wenn er aus Stahl gebildet ist.

Von besonderem Vorteil ist es, wenn die leitenden Teile des Kabels mit dem anorganischen Material bewickelt sind. Eine Bewicklung des Leiters oder der Ader mit anorganischem Material hat bezüglich des Brandverhaltens und somit des Funktionserhalts den Vorteil, dass bei einem Biegen des Kabels die Längenänderung zwischen innerer, äußerer und neutraler Biegelinie durch die Überlappung der Bänder ausgeglichen wird.

Die Bewicklung der leitenden Teile wie Ader oder Leiter bewirkt, dass auch nachdem die organische Bestandteile des Mantels, beispielweise einer Isolierung, verbrannt sind, die Spannungsfestigkeit zwischen den Aufbauelementen weiter besteht, d. h. der Funktionserhalt bleibt erhalten. Weiters bewirken die Bewicklungen einen verzögerten Abbrand der organischen Bestandteile der Isolier- bzw. Mantelmaterials.

Kostengünstiger in der Herstellung ist es, wenn die leitenden Teile bzw. Adern längsbedeckt sind, wobei allerdings das Risiko, dass bei Biegungen des Kabels das längslaufende Band an der Überlappungsstelle aufklafft und den Funktionserhalt negativ beeinflusst, größer ist.

In Versuchen hat es sich als günstig für den Funktionserhalt herausgestellt, wenn das anorganische Material aus Glas, Glasseidebändern, Glimmerbändern oder Glaskordeln gebildet ist.

Besonders lange lässt sich der Funktionserhalt gewährleisten, wenn der Mantel des Kabels einen Innen- und einen Außenmantel aufweist.

Aufgrund der notwendigen Stabilität ist es von Vorteil für den Funktionserhalt, wenn der Mantel aus einem thermoplastischen Compoundmaterial gebildet ist.

Einen noch höhere Stabilität kann erreicht werden, wenn der Mantel aus einem vernetzten Compoundmaterial gebildet ist. Diese Compunds werden auf Basis von Ethylen-Venyö-Acetat (EVA), Ethylen-Propylen-Rubber (EPR), Polyethylen bzw. Silokonkautschuk hergestellt und mit anorganischen Stoffen wie Aluminiumhydroxid, Kreide und dgl. gefüllt.

Um die Zerstörung des Mantels, etwa der Isolierhülle, beim Brand möglichst zu verzögern bzw. die anorganischen Rückstände des Mantels zu stabilisieren, ist es günstig, wenn zwischen den Aufbauelementen des Kabels, wie Leiter, Ader oder Vierer, Kabelseele, Kupferschirm, Mantel, Armierung, Außenmantel, Schutzhülle etc. Flammbarrieren angeordnet sind.

Zweckmäßigerweise sind dabei die Flammbarrieren wieder aus Glas, Glasseide, Glimmerbändern oder Glaskordeln gebildet sind.

Ein besonders guter und stabiler Halt des Befestigungssatzes insbesondere im Brandfall ist dann gegeben, wenn die Rastvorrichtung der Halteschiene als Verzahnung an der Schiene ausgebildet ist.

Eine einfache Befestigung ist möglich, wenn der Befestigungssatz im wesentlichen eine Mutter-Schraube-Verbindung ist, mittels welcher ein Halteelement mit der zugehörigen Halteschiene verschraubbar ist.

Bei Brandversuchen hat es sich im Sinne eines Funktionserhalts der Kabelanlage als besonders vorteilhaft herausgestellt, wenn die Mutter bzw. der Schraubenkopf bei einem Verschrauben mit der Halteschiene in die Rastvorrichtung der Schiene eingreift.

Kommt es in Folge der Hitzentwicklung zu einem Ausdehnen der Mutter-Schraubeverbindung, so ist der Halt des Befestigungssatzes trotzdem gegeben, da ein Abrutschen in Folge des Eingreifens in die Verzahnung nicht möglich ist.

Ein besonders guter Halt ist dabei gegeben, wenn die Mutter als Schrägmutter bzw. der Schraubenkopf abgeschrägt ausgebildet ist.

Ein Abrutschen der Kunststoff-Tasse bzw. der Kabel auch im Brandfall ist dann verhindert, wenn das Halteelement im wesentlichen ein L-Profil aufweist, und der Auflagebereich für die Kunststoff-Tasse in einem vorderen Bereich eine im wesentlichen nach oben gerichtete Kröpfung aufweist.

Damit im Brandfall auch die Kunststoff-Tasse einen gewissen Brandschutz - ohne die Nachteile einer Metalltasse - für die Kabel bildet, ist es günstig, wenn die Tasse aus Polyester gebildet ist, und das Polyester mit Glasfasern verstärkt ist.

Der Brandschutz kann weiters noch erhöht werden, wenn das Polyester halogenfrei und selbstverlöschend ausgebildet ist.

Im folgenden ist die Erfindung an Hand der Zeichnung näher erläutert. In dieser zeigen
- Fig. 1: eine schematische Darstellung einer Kabelanlage,
- Fig. 2: eine schematische Ansicht einer Halteschiene mit daran befestigten Halteelementen,
- Fig. 3: eine beispielhafte Darstellung eines Halteelementes für Kabeltassen,
- Fig. 4: eine Halteschiene zur Befestigung von Kabeltassen im lichten Raum,
- Fig. 5: eine Halteschiene zur Befestigung von Kabeltassen an einer Wand,
- Fig. 6: einen als Schraube-Mutter-Verbindung ausgebildeten Befestigungssatz,
- Fig. 7: ein Beispiel für ein verwendetes Lichtwellenleiterkabel,
- Fig. 8: eine Detailansicht eines Bereiches eines Kabels nach der Fig. 7, und
- Fig. 9: ein Beispiel für ein verwendetes elektrisches Kabel.

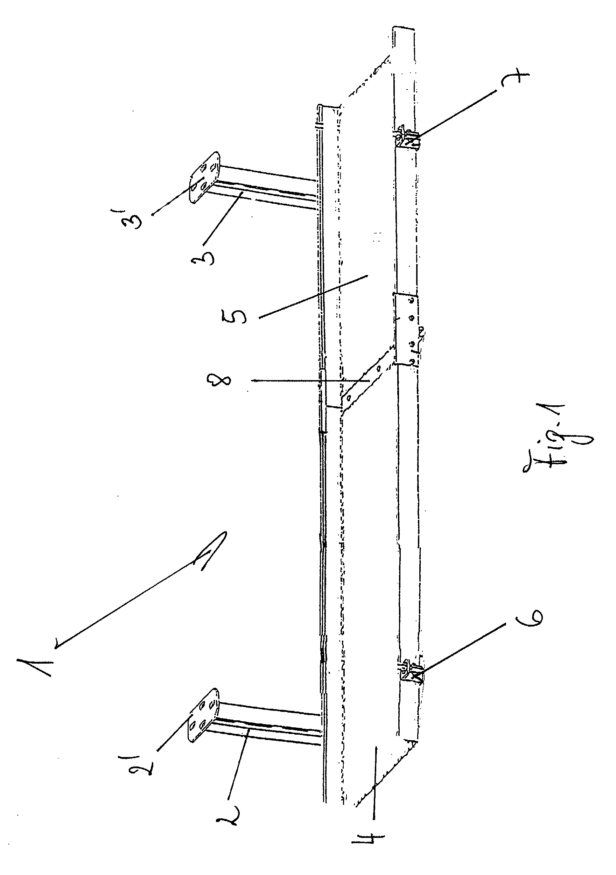

Die Fig. 1 zeigt schematisch eine Kabelanlage 1, welche aus Kabeltassen 4, 5 besteht, die mittels Halteschienen 2, 3 im lichten Raum gehalten sind. Dazu sind an den Halteschienen 2, 3 Halteelemente 6, 7 befestigt, auf welchen die Kabeltassen 4, 5 aufliegen. Die Halteschienen 2, 3 sind mittels Befestigungsplatten 2', 3' an einer Decke montiert. In der Figur sind nur zwei Kabeltassen 4, 5 auf zwei Halteelementen 6, 7 gezeigt, üblicherweise sind allerdings bei einer solchen Kabelanlage eine Reihe von Kabeltassen auf mehreren Halteelementen angeordnet. Die Kabeltassen 4, 5 sind beispielsweise mittels Verbindern 8 miteinander verbunden, etwa verschraubt. In den Kabeltassen 4, 5 sind ein oder mehrere, in der Zeichnung nicht dargestellte Kabel, beispielsweise Energiekabeln, Signal- und Steuerkabeln, Lichtwellenleiterkabeln, etc. verlegt. Bei den verwendeten Kabeltassen 4, 5 handelt es sich um Kunststofftassen, welche vorzugsweise aus Polyester gebildet sind. Die Verwendung von Kunststofftassen ist insbesondere durch die negativen elektrischen Eigenschaften von Metalltassen, wie in der Beschreibungseinleitung erörtert, nahegelegt.

Hinsichtlich des Funktionserhaltes im Brandfalle ist es dabei besonders von Vorteil, wenn das Polyester halogenfrei und selbstverlöschend ausgebildet ist, da dadurch die Kabel in den Tassen vor der Hitze und den Flammen zumindest für eine gewisse Zeit geschützt sind.

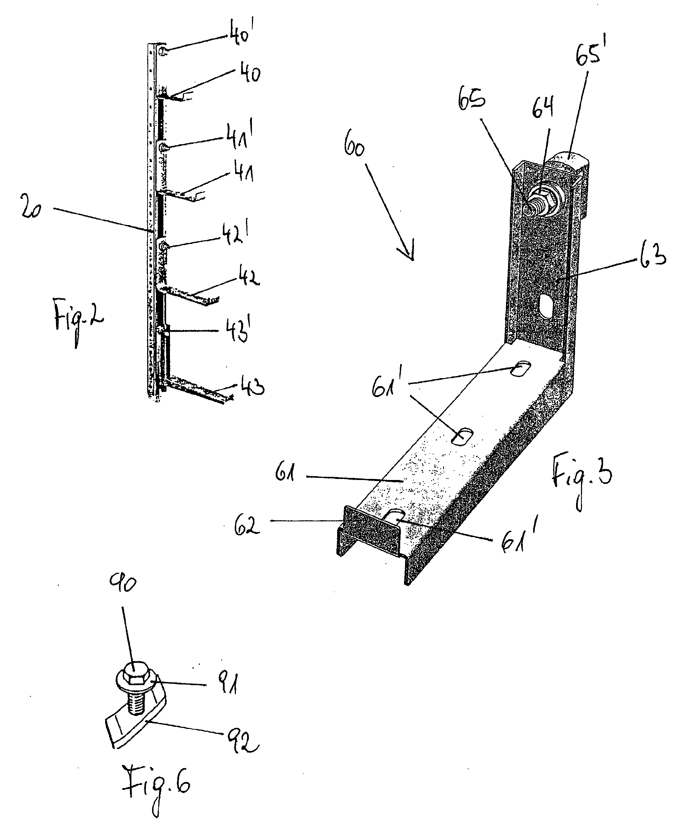

In der Fig. 2 ist eine Halteschiene 20 gezeigt, welche beispielsweise an einer Wand befestigbar ist. An der Halteschiene 20 sind mehrere Halteelemente 40, 41, 42, 43 übereinander angeordnet mittels Befestigungssätzen 40', 41', 42', 43' befestigt, sodass mehrere Lagen von Kabeltassen übereinander angeordnet im lichten Raum oder an einer Wand verlaufen.

Die Fig. 3 zeigt ein Beispiel für ein als Ausleger 60 ausgebildetes Halteelement. Das Halteelement weist ein L-Profil auf. Eine nicht dargestellte Kabeltasse liegt im befestigten Zustand auf einem als Auflagefläche 61 des Auslegers 60 ausgebildeten Schenkel des L-Profils auf und ist in der Regel fest mit diesem verbunden, in dem beispielsweise Verbinder 8 (siehe Fig. 1) über Bohrungen 61' an der Auflagefläche 61 des Auslegers 60 verschraubt sind. In einem vorderen Bereich ist der Ausleger 60 gekröpft ausgebildet bzw. weist einen Vorsprung 62 auf, der einen Anschlag für die Kabeltasse darstellt. Die Kröpfung bzw. der Vorsprung 62 bewirkt im Brandfalle unter anderem, dass bei einem Verformen des Auslegers 60 in Folge der Hitze ein nach unten Rutschen der Kabeltasse verhindert wird, sodass im Brandfalle der Funktionserhalt gewährleistet ist und nicht durch ein vorzeitiges Abrutschen der Kabeltasse vermindert wird. Außerdem sind im Falle des vollständigen Abschmelzens der Kabeltassen die Kabel, welche dann lediglich auf den Halteelementen 60 aufliegen, durch den Vorsprung 62 bzw. die Kröpfung des Halteelementes 60 gegen ein Abrutschen von der Auflagefläche 61 gesichert.

Der zweite Schenkel 63 des L-Profils weist ebenfalls eine oder mehrere Bohrungen auf, über welche der Ausleger 60 mit Befestigungsmitteln 64, 65, 65' an der Halteschiene befestigbar ist. Beispielsweise sind diese Befestigungsmittel gemäß Fig. 3 als Schraube 65 mit Schraubenkopf 65' und Mutter 64 ausgebildet.

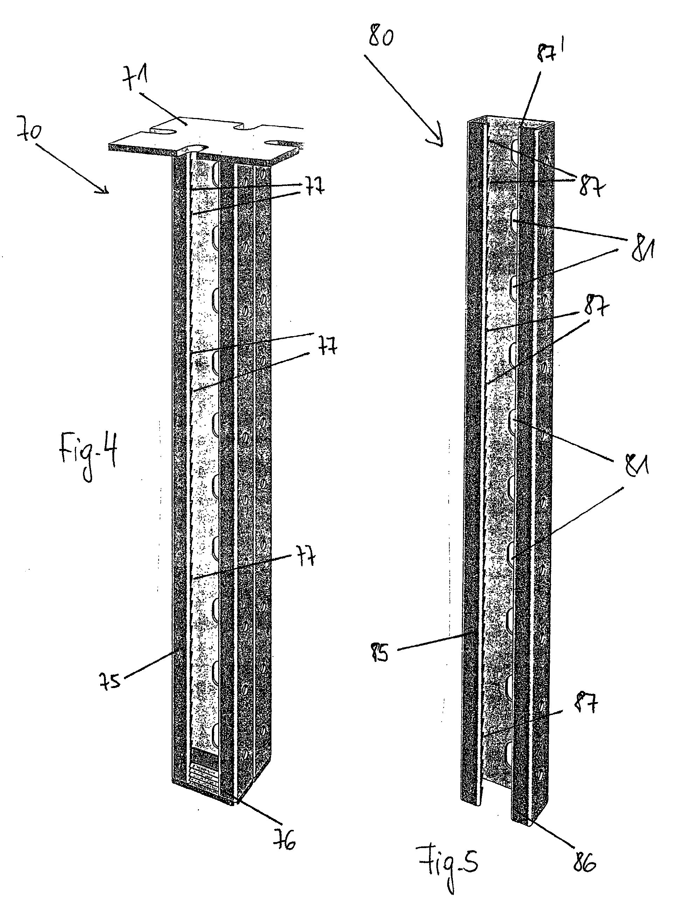

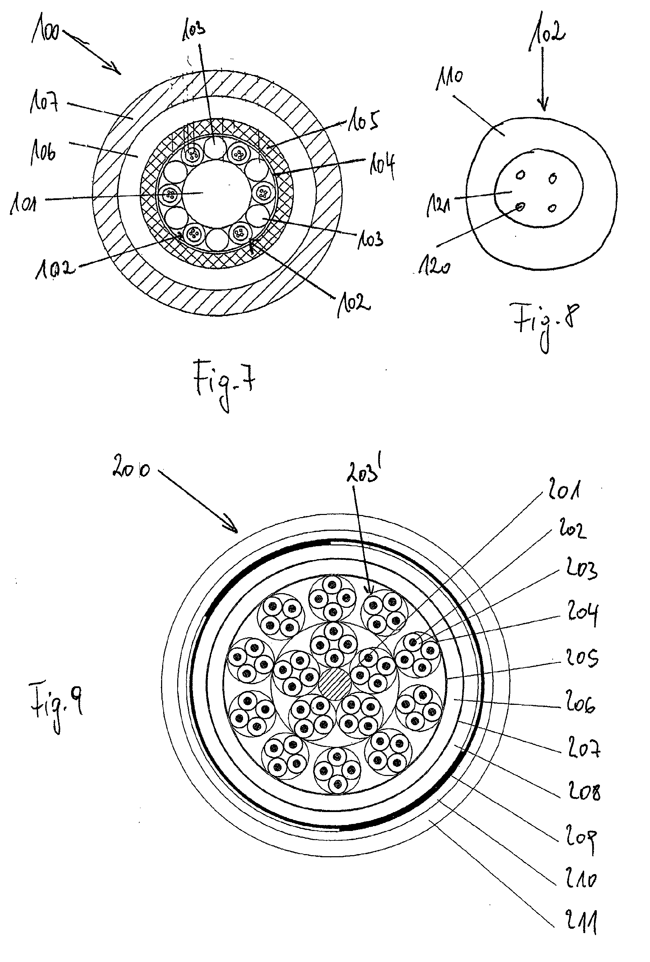

Gemäß der Erfindung erfolgt die Befestigung eines Halteelementes 60 an Halteschienen 70, 80 wie in den Figuren 4 und 5 dargestellt. In der Fig. 4 ist dabei eine Halteschiene 70 ähnlich der schematisch in Fig. 1 gezeigten dargestellt, welche über eine Montageplatte 71 an einer Decke eines Raumes beispielsweise mittels Stahldübeln befestigbar ist. Die in Fig. 5 gezeigte Schiene hingegen dient zur Montage an einer Wand, wobei die Befestigung beispielsweise durch Verschrauben über Bohrungen 81 in einer Rückwand 82 der Halteschiene 80 erfolgt.

Die Halteschienen 60 sind beispielsweise aus Stahlblech gebildet, welches kaltgewalzt und feuerverzinkt ist. Die gezeigten Halteschienen weisen im wesentlichen ein U- bzw. C-Profil auf, das in einem vorderen, offenen Bereich einander zugewandte Vorsprünge 75, 76; 85, 86 aufweist, an welche ein Ausleger 60 wie aus der Fig. 3 beispielsweise mittels Schraube und Mutter angeschraubt wird.

Wie den Figuren 4 und 5 weiters zu entnehmen ist, weisen erfindungsgemäß die Halteschienen 70, 80 an der Innenseite der Vorsprünge 75, 76; 85, 86 Rastvorrichtungen 77, 87, 87' auf, die in der gezeigten Ausführungsform als Verzahnungen ausgebildet sind. In diese Verzahnungen greift bei einem Befestigen, etwa einem Verschrauben des Auslegers 60 entweder der Schraubenkopf 65' aus der Fig. 3 ein, oder bei einer Verwendung eines Befestigungssatzes gemäß der Fig. 6, bestehend aus Schraube 90, Scheibe 91 und Schrägmutter 92, die Schrägmutter 92 in die Verzahnung ein. Damit ist ein einfaches und relativ freies Positionieren der Ausleger in den Halteschienen möglich, und außerdem bietet das Zusammenwirkung der Verzahnung 77, 87, 87' mit einer Schrägmutter 92 bzw. einem in der Fig. 3 auf diese Weise nicht dargestellten, abgeschrägten Schraubenkopf 65' im Brandfall weiters den Vorteil, dass auch bei einer Ausdehnung und Verformung der Materialien in Folge der Hitze nach wie vor ein Eingreifen in die Verzahnung gegeben und so ein Abrutschen der Ausleger verhindert ist, wodurch der Funktionserhalt der Kabelanlage gewährleistet wird.

Üblicherweise werden Halteschienen ohne Verzahnung verwendet, und das Anschrauben der Ausleger erfolgt unter Verwendung von Messingschrauben bzw.- muttern. Eine Verzahnung ist in der Regel nicht notwendig, da sich das Messing leicht verformen lässt und so bei entsprechend hohem Anpressdruck einen guten Halt der Ausleger bietet. Im Brandfall führt dies aber dazu, dass das Messing relativ rasch an Festigkeit verliert, sodass es wiederum zu einem Abrutschen der Ausleger, die in der Regel aus feuerverzinktem Stahl gebildet sind, kommt, wodurch in der Regel die Kabel mechanisch beschädigt oder zerstört werden, und der Funktionserhalt dann nicht mehr gegeben ist.

Gemäß der Erfindung ist daher weiters darauf zu achten, dass die Befestigungsmittel für die Ausleger aus einem hitzebeständigen Material gebildet sind, wobei die Verwendung von Stahl für diese Elemente bevorzugt wird, das neben der Hitzebeständigkeit auch noch die entsprechenden mechanischen Eigenschaften mitbringt.

Durch die wie oben beschriebene Kombination von Merkmalen ist ein wesentlicher Schritt zu einem integrierten Funktionserhalt einer Kabelanlage bereits verwirklicht. Auf der einen Seite kann auf die aus anderen Gründen nachteilige Verwendung von Metalltassen für Kabel verzichtet werden, auf der anderen Seite bieten auch die verwendeten Kunststoffmaterialien für die Tassen zumindest für eine gewisse Zeitdauer Schutz für die Kabel im Brandfall. Ein Lösen und zu Boden fallen der Ausleger ist zuverlässig verhindert, und auch nach einer starken oder vollständigen Zerstörung der Kunststofftassen sind die Kabel auf den Auslegern noch zuverlässig gehalten, sodass es zu keiner Beeinträchtigung der Kabelfunktion durch ein Herunterfallen und die damit verbundene mechanische Beanspruchung der Kabel kommt.

Damit die Kabel an sich im Brandfall ihre Funktion aufrecht erhalten können, sind auch an diese erfindungsgemäße Forderungen zu stellen. Gemäß der Erfindung ist es für den integrierten Funktionserhalt notwendig, dass bei den verwendeten Kabeln die leitenden Teile von einer Isolierung umgeben sind, welche bei entsprechender Hitzeeinwirkung ein Aschgerüst bildet. Alternativ oder zusätzlich kann auch vorgesehen sein, dass die leitenden Teile der Kabel von einem anorganischen, brandbeständigen Material vollständig ummantelt sind.

Auf diese Weise können sich die leitenden Teile, etwa die Adern des Kabels, im Brandfalle auch bei einer Beschädigung des Kabels nicht berühren, sodass es zu keinen elektrischen Kurzschlüssen kommt. Die leitenden Teile des Kabels können dabei mit dem anorganischen Material bewickelt oder auch längsbedeckt sein. Vorzugsweise ist das anorganische Material aus Glas, Glasseide oder Glimmer oder Glimmerbändern oder Glaskordeln gebildet.

In der Fig. 7 ist ein Beispiel für ein im Zusammenhang mit der Erfindung verwendetes Lichtwellenleiterkabel 100 gezeigt. Das Kabel 100 weist ein zentrales Stützelement 101 aus glasfaserverstärktem Kunststoff auf. Um dieses herum sind sechs Adern 102 angeordnet, welche durch ein anorganisches Material 103 voneinander getrennt sind. Die Adern 102 sowie das anorganische Material 103 sind in einem radial äußeren Bereich von einem Flammbarriereband 104 umgeben. Um dieses herum findet sich eine Bewicklung 105 aus sogenannten Glasrovings, in denen eine Vielzahl von Glasfäden zusammengefasst ist. Dieser Glasroving 105 bildet einen sehr guten Wärmeschutz, da er eine nur geringe Wärmedurchlässigkeit aufweist, und außerdem verhilft er dem Kabel zu einer hohen Zugfestigkeit.

Der Mantel weist einen zweiteiligen Aufbau auf, wobei sowohl der Innen- als auch der Außenmantel 106, 107 aus einem flammwidrigen, halogenfreien Material gebildet sind. Der innenliegende Mantel ist aus einem hochgefüllten Compound hergestellt, der nach einem Abbrand eine stabiles Aschgerüst bildet. Der äußere Mantel hat eine höhere mechanische Festigkeit und bietet den für den Gebrauch notwendigen Schutz. Grundsätzlich ist natürlich auch ein einteiliger Aufbau des Mantels denkbar.

Die Fig. 8 zeigt noch eine Detailansicht einer Ader 102 des Kabels 100. Diese besteht in der gezeigten Ausführung im wesentlichen aus vier Singlemodefasern 120 sowie einer Aderfüllmasse 121, beispielsweise aus Petrolat. Die Ader 102 ist von einem Kunststoff 110 vollständig ummantelt, welcher beispielsweise aus Polypropylen gebildet ist.

Die Fig. 9 zeigt schließlich noch ein für die Erfindung verwendetes elektrisches Kabel 200, welches aus einem zentralen Element 201, den Leitern 202, einem als Isolierung ausgebildeten Ummantelung 203 für die Leiter 202, sowie Bewicklungen 204 der Adern 203', welche aus Leiter und Isolierung 203 gebildet sind, besteht. Im Brandfall bildet dabei die Isolierung 203, zumeist gemeinsam mit der Umwickelung 204 erfindungsgemäß eine stabiles Aschgerüst. Die Bewicklung 204 besteht aus einem anorganischen, flammwidrigen Material wie weiter oben bereits allgemein genauer erläutert.

Die Seele des Kabels 200, bestehend aus den Elementen 201 - 204, ist mit einer Bewicklung 205 versehen, die wiederum mit einem flammwidrigen, halogenfreien Mantel 206 umgeben ist. Anschließend befindet sich ein Schirm 207, der die Leiter vor elektromagnetischen Einflüssen dient.

Der weitere Aufbau des Kabels besteht dann noch aus einem Mantel 208, einer üblicherweise aus Stahlbändern bestehenden Armierung 209, einem hochgefüllten Compound 210 und einem Außenmantel 211. Günstig, wenn auch nicht unbedingt notwendig ist es, wenn weiters der Mantel 208 bzw. 211 im Brandfall ein stabiles Aschgerüst bildet.

Mit der vorliegenden Erfindung ist nicht nur der Funktionserhalt von Kabeln an sich im Brandfall erfüllbar, sondern insbesondere der Funktionserhalt der gesamten Anlage. Bei Verwendung einer erfindungsgemäßen Kabelanlage tritt daher nicht mehr das Problem auf, dass zwar das Kabel die Funktion trotz Brandes aufrecht erhalten könnte, in Folge der Zerstörung der Haltevorrichtungen für das Kabel dieses aber mechanisch beschädigt und dann nicht mehr funktionstüchtig bzw. anfällig für eine Zerstörung durch den Brand ist.

## Patentansprüche

1. Kabelanlage bestehend aus zumindest einem Kabel (100), welches von einer Kabeltragekonstruktion gehalten ist, wobei die Kabeltragekonstruktion besteht aus:
- zumindest einer aus Kunststoff gebildeten Kabeltasse (4, 5), in welcher das zumindest eine Kabel verlegt ist;
- Halteelementen (6, 7; 40 - 43; 70; 80), welche zur Halterung der Kabeltasse (4, 5) dienen, wobei die Halteelemente (6, 7; 60) je an einer Halteschiene (2, 3) mittels zumindest eines Befestigungssatzes (40'- 43'; 64, 65, 65'; 90, 91, 92) befestigbar sind,
**dadurch gekennzeichnet, dass**
a) die Halteschiene (60, 70) zumindest eine Rastvorrichtung (77; 87, 87') aufweist, mittels welcher der Befestigungssatz (40' - 43'; 64, 65, 65'; 90, 91, 92) des Halteelementes (6, 7; 40-43; 70; 80) zusammenwirkt,
b) der Befestigungssatz (40' - 43'; 64, 65, 65'; 90, 91, 92) aus einem hitzebeständigen Material gebildet ist, und
c) das zumindest eine Kabel (100, 200) einen Aufbau aufweist, bei dem die leitenden Teile (201) und/oder Adern (102) von zumindest einem Mantel (106; 203, 208, 211) umgeben sind, welcher bei entsprechender Hitzeeinwirkung ein Aschgerüst bildet und/oder die leitenden Teile (201) und/oder Adern (102) von einem anorganischen, brandbeständigen Material (104, 105; 204, 206) vollständig ummantelt sind.

2. Kabelanlage nach Anspruch 1, **dadurch gekennzeichnet, dass** der Befestigungssatz (40'- 43'; 64, 65, 65'; 90, 91, 92) aus Stahl gebildet ist.

3. Kabelanlage nach Anspruch 1 oder 2, **dadurch gekennzeichnet, dass** die leitenden Teile (201) und/oder Adern (102) des Kabels (100, 200) mit dem anorganischen Material bewickelt sind.

4. Kabelanlage nach Anspruch 1 oder 2, **dadurch gekennzeichnet, dass** die leitenden Teile (201) und/oder Adern (102) des Kabels (100, 200) mit dem anorganischen Material (104, 105; 204, 206) längsbedeckt sind.

5. Kabelanlage nach einem der Ansprüche 1 bis 4, **dadurch gekennzeichnet, dass** das anorganische Material (110) aus Glas, Glasseide, Glimmerbändern oder Glaskordeln gebildet ist.

6. Kabelanlage nach einem der Ansprüche 1 bis 5, **dadurch gekennzeichnet, dass** der zumindest eine Mantel des Kabels (200) einen Innen- und einen Außenmantel (208, 211) aufweist.

7. Kabelanlage nach einem der Ansprüche 1 bis 6, **dadurch gekennzeichnet, dass** der zumindest eine Mantel (106; 203, 208, 211) aus einem thermoplastischen Compoundmaterial gebildet ist.

8. Kabelanlage nach einem der Ansprüche 1 bis 7, **dadurch gekennzeichnet, dass** der zumindest eine Mantel (106; 203, 208, 211) aus einem vernetzten Compoundmaterial gebildet ist.

9. Kabelanlage nach einem der Ansprüche 1 bis 8, **dadurch gekennzeichnet, dass** zwischen den Aufbauelementen des Kabels (100) Flammbarrieren (103, 104, 105) angeordnet sind.

10. Kabelanlage nach Anspruch 9, **dadurch gekennzeichnet, dass** die Flammbarrieren (103, 104, 105) aus Glas, Glasseidebänder, Glimmerbändern oder Glaskordeln gebildet sind.

11. Kabelanlage nach einem der Ansprüche 1 bis 10, **dadurch gekennzeichnet, dass** die Rastvorrichtung der Halteschiene (70, 80) als Verzahnung (77; 87, 87') an der Schiene ausgebildet ist.

12. Kabelanlage nach einem der Ansprüche 1 bis 11, **dadurch gekennzeichnet, dass** der Befestigungssatz im wesentlichen einen Mutter-Schraube-Verbindung (64, 65, 65'; 90, 91, 92) ist, mittels welcher ein Halteelement (6, 7; 40 - 43; 60) mit der zugehörigen Halteschiene verschraubbar ist.

13. Kabelanlage nach Anspruch 11 und 12, **dadurch gekennzeichnet, dass die** Mutter (92) bzw. der Schraubenkopf (65') bei einem Verschrauben mit der Halteschiene in die Rastvorrichtung (77; 87, 87') der Schiene (70, 80) eingreift.

14. Kabelanlage nach Anspruch 13, **dadurch gekennzeichnet, dass** die Mutter als Schrägmutter (92) bzw. der Schraubenkopf (65') abgeschrägt ausgebildet ist.

15. Kabelanlage nach einem der Ansprüche 1 bis 14, **dadurch gekennzeichnet, dass** das Halteelement (60) im wesentlichen ein L-Profil aufweist, und der Auflagebereich (61) für die Kunststoff-Tasse in einem vorderen Bereich eine im wesentlichen nach oben gerichtete Kröpfung (62) aufweist.

16. Kabelanlage nach einem der Ansprüche 1 bis 15, **dadurch gekennzeichnet, dass** die Tasse (4, 5) aus Polyester gebildet ist.

17. Kabelanlage nach Anspruch 16, **dadurch gekennzeichnet, dass** das Polyester mit Glasfasern verstärkt ist.

18. Kabelanlage nach Anspruch 16 oder 17, **dadurch gekennzeichnet, dass** das Polyester halogenfrei und selbstverlöschend ausgebildet ist.
